# EUROPÄISCHE PATENTSCHRIFT

(11) **EP 4 402 451 B1**
(45) Veröffentlichungstag und Bekanntmachung des Hinweises auf die Patenterteilung: **27.11.2024**
(21) Anmeldenummer: 22790472.9
(22) Anmeldetag: 16.09.2022
(51) Int. Cl.: G01M 17/007

(54) **VERFAHREN ZUR STABILISIERUNG EINES FAHRERLOSEN EINSPURIGEN KRAFTFAHRZEUGS AUF EINEM ROLLENPRÜFSTAND, SOWIE STABILISIERUNGSVORRICHTUNG, ROLLENPRÜFSTAND UND PRÜFSYSTEM**
METHOD FOR STABILIZING A DRIVERLESS SINGLE-TRACK MOTOR VEHICLE ON A ROLLER DYNAMOMETER, AND STABILIZING DEVICE, ROLLER DYNAMOMETER AND TEST SYSTEM
PROCÉDÉ POUR STABILISER UN VÉHICULE AUTOMOBILE MONOVOIE SANS CONDUCTEUR SUR UN BANC D'ESSAI À ROULEAUX, DISPOSITIF DE STABILISATION, BANC D'ESSAI À ROULEAUX ET SYSTÈME DE CONTRÔLE

(30) Priorität: 17.09.2021 AT 507342021
(43) Veröffentlichungstag der Anmeldung: 24.07.2024
(73) Patentinhaber: Kristl, Seibt & Co. Gesellschaft M.B.H., 8052 Graz (AT)
(72) Erfinder: ROSSEGGER, Wolfram, 8042 Graz-St. Peter (AT); ARTNER, Karl-Gerald, 8723 Kobenz (AT)
(74) Vertreter: SONN Patentanwälte GmbH & Co KG
(86) Internationale Anmeldenummer: PCT/EP2022/075799
(87) Internationale Veröffentlichungsnummer: WO 2023/041722

(56) Entgegenhaltungen:
- DE-U1- 8 320 156
- US-B1- 10 417 930

## Beschreibung

Die Erfindung betrifft ein Verfahren zur Stabilisierung eines fahrerlosen einspurigen Kraftfahrzeugs während eines Prüflaufs auf einem Rollenprüfstand gemäß dem Oberbegriff des Anspruches 1. Des Weiteren betrifft die Erfindung eine Stabilisierungsvorrichtung zur Stabilisierung eines fahrerlosen einspurigen Kraftfahrzeugs während eines Prüflaufs auf einem Rollenprüfstand gemäß dem Oberbegriff des Anspruches 9. Darüber hinaus betrifft die Erfindung einen Rollenprüfstand mit einer solchen Stabilisierungsvorrichtung sowie ein Prüfsystem bestehend aus einem Rollenprüfstand und einem Kraftfahrzeug.

In der Entwicklungsphase, in der Produktion oder bei Überprüfungen werden Motorräder, wie auch andere einspurige Kraftfahrzeuge, häufig auf Rollenprüfständen getestet. Bei vielen Rollenprüfständen wird dabei das Vorderrad des Kraftfahrzeugs in einer Halte- oder Klemmvorrichtung fixiert und nur das Hinterrad auf einer Hinterradrolleneinheit platziert. Das Hinterrad wird von einem Motor des Kraftfahrzeugs oder von der Hinterradrolleneinheit angetrieben. Durch die Fixierung des Vorderrads wird gewährleistet, dass das Kraftfahrzeug in Längsrichtung gehalten wird und aufrecht stehen bleibt.

Bei manchen Tests von einspurigen Kraftfahrzeugen, wie beispielsweise bei gesamtheitlichen Tests am Ende einer Produktionslinie (sog. "End of Line"-Tests), bei Bremsentests mit ABS-Bremssystemen oder bei Tests von einspurigen Kraftfahrzeugen mit Fahrsicherheitsprogrammen, kann es aber erforderlich sein, neben dem Hinterrad auch das Vorderrad mit einer bestimmten Drehzahl anzutreiben. Zu diesem Zweck existieren Rollenprüfstände für einspurige Kraftfahrzeuge mit Rolleneinheiten für Vorder- und Hinterräder. Die Rolleneinheiten können jeweils zwei parallele Rollen (sog. Doppelrollen) aufweisen, zwischen denen die Vorder- und Hinterräder in Längsrichtung des Kraftfahrzeugs stabilisiert werden. Allerdings können einspurige Kraftfahrzeuge während eines Prüflaufs auf solchen Rollenprüfständen zur Seite kippen oder sich von der Mitte der jeweiligen Rolleneinheit wegbewegen, sodass es erforderlich ist, dass ein Fahrer das Kraftfahrzeug aufrecht hält und durch entsprechende Lenkbewegungen stabilisiert.

Aus der US 10,417,930 B1 ist ein Fahr-Simulator bekannt, bei dem die Hinterradaufhängung eines Motorrads mittels einer um eine horizontale Achse neigbaren Gabel fixiert ist. Sowohl das Vorderrad, als auch das Hinterrad werden mittels Walzen angetrieben. Mit Hilfe von Hydraulikzylindern und Sensoren kann das Motorrad um die eigene Längsachse geneigt werden und so eine Fahrt simuliert werden. Am Vorderrad sind Leinen befestigt, um ein Abrutschen des Vorderrades von der Vorderradwalze zu verhindern. Eine Lenkbewegung ist aber weiterhin möglich, sodass das Motorrad ohne Fahrer nicht ausreichend stabilisiert wäre.

Auch in US 5,076,792 A ist ein Motorrad auf einem Simulator gezeigt, bei dem das Hinterrad und das Vorderrad angetrieben werden. Ein Stützelement des Prüfstands ist mit dem unteren Rahmenteil des Motorrads verbunden. Da das Vorderrad nicht fixiert ist, ist auch mit dem Simulator der US 5,076,792 A kein stabiler, unbemannter Betrieb möglich.

DE 83 20 156 U1 offenbart einen Rollenprüfstand für ein Zweirad-Fahrzeug, der zwei parallele, antreibbare Rollen aufweist. Um das Zweirad-Fahrzeug für unterschiedliche Fahrbahnbeläge zu testen, weisen die Rollen einzelne, in axiale Richtung aufeinanderfolgend angeordnete Zonen unterschiedlicher Beschaffenheit auf. Durch Verschiebung des Fahrzeugs entlang der Achsen der Rollen kann das Fahrzeug an den unterschiedlichen Zonen getestet werden. Das Zweirad-Fahrzeug ist während des Testvorgangs in einer Festhaltevorrichtung gefesselt, die das Fahrzeug gegen seitliche Verschiebungen, gegen Längsverschiebungen und gegen Drehungen um die Hochachse sichert. Zur Simulation von Seitenneigungen ist ein Aufnahmeteil der Festhaltevorrichtung um einen Bolzen drehbar gelagert. Ein Gelenkelement mit einer vertikalen Drehachse wird in DE 83 20 156 U1 nicht offenbart.

Ein weiterer Prüfstand für Fahrzeuge ist aus JP H 02136674 U bekannt.

Im Lichte dieser Ausführungen ist es Aufgabe der Erfindung, die Nachteile des Standes der Technik zumindest teilweise oder vollständig zu lindern. Vorzugsweise ist es Aufgabe der vorliegenden Erfindung, ein Verfahren und eine Stabilisierungsvorrichtung der eingangs erwähnten Art zur Verfügung zu stellen, mit denen ein stabiler fahrerloser Prüflauf eines einspurigen Kraftfahrzeugs auf einem Rollenprüfstand ermöglicht wird, bei dem sowohl das Vorderrad, als auch das Hinterrad angetrieben wird.

Gelöst wird diese Aufgabe durch ein Verfahren mit den Merkmalen des Anspruches 1 und eine Stabilisierungsvorrichtung mit den Merkmalen des Anspruches 9. Bevorzugte Ausführungsformen sowie ein Rollenprüfstand und ein Prüfsystem sind in den abhängigen Ansprüchen angegeben.

Erfindungsgemäß weist das Verfahren nach Anspruch 1 folgende Schritte auf:
Verbinden eines Vorderradlenkteils des Kraftfahrzeugs mit einer Stabilisierungsvorrichtung, die einen feststehenden Basisteil, ein Verbindungselement zur Verbindung mit dem Vorderradlenkteil und ein mit dem Basisteil und dem Verbindungselement verbundenes Gelenkelement aufweist, wobei das Gelenkelement zumindest eine im Wesentlichen vertikale Drehachse besitzt;
Antreiben eines Vorderrades des Kraftfahrzeugs durch eine Vorderradrolleneinheit und/oder Antreiben eines Hinterrades des Kraftfahrzeugs durch eine Hinterradrolleneinheit; und
Stabilisieren des Kraftfahrzeugs durch Rückführen des Vorderrades an eine Vorderrad-Sollposition an der Vorderradrolleneinheit durch die Stabilisierungsvorrichtung im Falle einer Abweichung des Vorderrads von der Vorderrad-Sollposition.

Durch die Stabilisierungsvorrichtung wird, wenn das Vorderrad des Kraftfahrzeugs von der Vorderrad-Sollposition abweicht, das Vorderradlenkteil des Kraftfahrzeugs geneigt und so eine Lenkbewegung erzwungen, die das Vorderrad wieder an die Vorderrad-Sollposition an der Vorderradrolleneinheit zurückführt. Durch die Lenkbewegung des Vorderradlenkteils und Rückführung des Vorderrades an die Vorderrad-Sollposition wird auch das Hinterrad im Falle einer Abweichung zurück an seine Hinterrad-Sollposition geführt, sodass ein Selbstpositionierungs- und ein Selbststabilisierungseffekt des Kraftfahrzeugs eintritt. Vorteilhafterweise erfolgt die Rückführung des Vorderrades und des Hinterrades durch die Stabilisierungsvorrichtung passiv, d.h. ohne aktive Regelung oder Steuerung und ohne aktive Komponenten wie Stellmotoren oder gesteuerte Hydraulikzylinder. Ein weiterer Vorteil der Stabilisierungsvorrichtung liegt darin, dass durch die Möglichkeit der Lenkbewegung des Vorderradlenkteils Querkräfte vermieden werden können, die zu einer Verspannung des Kraftfahrzeugs und damit zu einer erhöhten Rollreibung am Prüfstand führen können. Die Vorderradrolleneinheit und/oder die Hinterradrolleneinheit können jeweils eine oder mehrere im Wesentlichen parallele Rollen aufweisen. Dementsprechend können die Vorderradrolleneinheit und/oder die Hinterradrolleneinheit auch eine oder mehrere im Wesentlichen parallele Rotationsachsen aufweisen. Die Vorderrad-Sollposition für das Vorderrad befindet sich, in Richtung der einen oder mehreren Rotationsachse/n der Vorderradrolleneinheit gesehen, vorzugsweise im Wesentlichen mittig an der Vorderradrolleneinheit. In der Vorderrad-Sollposition ist die Vorderachse des Kraftfahrzeugs im Wesentlichen parallel zu der einen oder mehreren Rotationsachse/n der Vorderradrolleneinheit orientiert. Entsprechend befindet sich auch die Hinterrad-Sollposition in Richtung der einen oder mehreren Rotationsachse/n der Hinterradrolleneinheit gesehen vorzugsweise im Wesentlichen mittig an der Hinterradrolleneinheit. In der Hinterrad-Sollposition ist die Hinterachse des Kraftfahrzeugs im Wesentlichen parallel zu der einen oder mehreren Rotationsachse/n der Hinterradrolleneinheit orientiert. Die Vorderradrolleneinheit und die Hinterradrolleneinheit können bevorzugt unabhängig voneinander betrieben werden. Der Vorderradrolleneinheit und/oder der Hinterradrolleneinheit kann jeweils zumindest ein Antriebsmotor, insbesondere ein Elektromotor, zugeordnet sein. Das Hinterrad muss während eines Prüflaufs jedoch nicht von der Hinterradrolleneinheit angetrieben werden. Das Hinterrad kann auch von einem Motor des Kraftfahrzeugs angetrieben werden. Das Vorderradlenkteil umfasst in dieser Offenbarung definitionsgemäß vorzugsweise alle Bestandteile eines einspurigen Kraftfahrzeugs, die gegenüber dem Hauptrahmen des Kraftfahrzeugs durch eine über die Lenkung ausgeübte Lenkbewegung verschwenkt werden können.

Insbesondere werden damit die Vorderradaufhängung, beispielsweise eine Vordergabel oder eine Schwinge, das Vorderrad, die Vorderachse, das Lenkrohr und die Lenkerstange bezeichnet. Der feststehende Basisteil der Stabilisierungsvorrichtung ist bevorzugt mit einem ortsfesten Punkt, beispielsweise einer Bodenfläche oder einer Wand, verbunden. Die Verbindung kann beispielsweise durch eine Schraub-, Niet- oder Schweißverbindung erfolgen. Das Verbindungselement dient zur lösbaren Verbindung mit dem Vorderradlenkteil des Kraftfahrzeugs. Die Verbindung zwischen dem Verbindungselement und dem Vorderradlenkteil kann beispielsweise eine Schraubverbindung oder eine Klemmverbindungsein. Es kann zum Beispiel vorgesehen sein, dass das Verbindungselement lösbar, vorzugsweise mit Hilfe einer oder mehrerer Schraubmuttern, mit einem oder zwei gegenüberliegenden überstehenden Achsenenden der Vorderachse des Kraftfahrzeugs verbunden ist. Die Achsenenden können dabei beispielsweise in entsprechende Drehlager des Verbindungselements aufgenommen sein. Es ist auch möglich, dass das Verbindungselement eine drehbar gelagerte Radachse aufweist, die vorrübergehend während des Prüflaufs die Vorderachse des Kraftfahrzeugs ersetzt. Das Gelenkelement ermöglicht durch die vertikale Drehachse eine Lenkbewegung des Vorderradlenkteils im Falle einer Abweichung des Vorderrads von der Vorderrad-Sollposition. Bevorzugt weist das Gelenkelement auch zumindest eine horizontale Drehachse auf. Ganz bevorzugt ist, wenn das Gelenkelement drei orthogonal zueinander orientierte Drehachsen aufweist. Die drei Drehachsen können durch jeweils drei unterschiedliche Gelenke gebildet sein. Bevorzugt ist jedoch, wenn die drei Drehachsen durch ein Kugelgelenk realisiert werden. Auf diese Weise kann eine besonders leichtgängige Lenkbewegung unabhängig von der Größe und Art des Motorrads erzielt werden. Richtungsangaben und Orientierungen in dieser Offenbarung beziehen sich auf die fahrbereite, aufrechte Ausgangsposition des Kraftfahrzeugs auf dem Rollenprüfstand, bei dem sich das Vorderrad in der Vorderrad-Sollposition und das Hinterrad in der Hinterradsollposition befinden. Das Vorderrad ist dabei "vorne" und das Hinterrad ist "hinten" angeordnet. Eine vertikale Drehachse des Gelenkelements ist vertikal im Raum, d.h. parallel zur Erdbeschleunigung, orientiert. Das Gelenkelement kann beispielsweise mittels einer Stange mit dem Basisteil verbunden sein.

Bevorzugt ist, wenn im Falle einer Abweichung des Vorderrads von der Vorderrad-Sollposition das Vorderradlenkteil durch das Gelenkelement derart gelenkt wird, dass das Vorderrad in die Vorderrad-Sollposition rückgeführt wird.

Günstig ist, wenn das Verbindungselement an einer Vorderradaufhängung, insbesondere einer Vorderachse, des Vorderradlenkteils mit dem Kraftfahrzeug verbunden ist. Dadurch ergibt sich einerseits eine besonders stabile Verbindung zwischen dem Verbindungselement und dem Vorderradlenkteil und andererseits eine unmittelbare Übertragung der Lenkbewegung auf das Vorderradlenkteil.

Um eine stabile und sichere Verbindung zwischen dem Vorderradlenkteil und der Stabilisierungsvorrichtung zu erzielen, ist es vorteilhaft, wenn das Verbindungselement zwei im Wesentlichen parallele Schenkel aufweist, die mit gegenüberliegenden Seiten des Vorderradlenkteils des Kraftfahrzeugs verbunden sind. Die Schenkel können über ein Endstück, beispielsweise eine insbesondere rechtwinkelig zu den Schenkeln angeordnete Querstange oder eine Querstrebe, miteinander verbunden sein. Das Verbindungselement ist bevorzugt bei dieser Ausführungsform als Gabel ausgebildet. Das Endstück kann wiederum mit dem Gelenkelement verbunden sein. An den dem Endstück gegenüberliegenden Enden der Schenkel können die Schenkel Drehlager für überstehende Vorderachsenenden oder Befestigungselemente aufweisen, mit denen die Schenkel mit dem Vorderradlenkteil verbindbar sind. Die Befestigungselemente können beispielsweise drehbar gelagert sein. Die Befestigungselemente können ebenfalls jeweils rechtwinkelig zu den Schenkeln orientiert sein. Es kann aber auch vorgesehen sein, dass das Verbindungselement eine drehbar gelagerte Radachse zwischen den Schenkeln aufweist, die während eines Prüflaufs die Vorderachse des Kraftfahrzeugs ersetzt. Die Radachse kann drehbar an den Schenkeln gelagert sein.

Günstig ist, wenn das Gelenkelement zumindest eine, vorzugsweise zwei, horizontale Drehachsen aufweist. Dadurch wir die Lenkbewegung verbessert.

Eine besonders vorteilhafte Ausgestaltung der Erfindung ergibt sich, wenn das Gelenkelement durch ein Kugelgelenk gebildet ist. Ein solches Kugelgelenk besitzt drei rotatorische Freiheitsgrade und damit auch drei Drehachsen, nämlich eine vertikale Drehachse und zwei horizontale Drehachsen. Vorteilhaft bei dieser Ausführungsform ist, dass das Verbindungselement bzw. das Kraftfahrzeug während der Lenkbewegung auch geneigt werden kann. Zudem werden vertikale Bewegungen des Verbindungselements während der Lenkbewegung ermöglicht. Außerdem kann die Stabilisierungsvorrichtung mit unterschiedlichen Typen und Größen von einspurigen Kraftfahrzeugen verwendet werden.

Damit einem allfälligen Umkippen des Kraftfahrzeugs zusätzlich entgegengewirkt werden kann, ist es vorteilhaft, wenn das Kraftfahrzeug mit zumindest einem Halteelement, vorzugsweise einem Haltegurt, an zumindest einer Haltevorrichtung fixiert wird. Das zumindest eine Halteelement kann beispielsweise an der Lenkerstange des Kraftfahrzeugs befestigt sein. Die zumindest eine Haltevorrichtung kann mit einem ortsfesten Punkt am Prüfstand verbunden sein. In der Ausgangsposition des Kraftfahrzeugs kann das zumindest eine Halteelement ohne Übertragung einer Halte- oder Spannkraft auf das Kraftfahrzeug, d.h. ohne Dehnung, mit dem Kraftfahrzeug verbunden sein. Im Falle einer Kippbewegung verhindert das zumindest eine Halteelement zusätzlich neben der Stabilisierungsvorrichtung das Umkippen des Kraftfahrzeugs. Vorzugsweise sind zwei insbesondere auf gegenüberliegenden Seiten des Kraftfahrzeugs angeordnete Halteelemente vorgesehen, die jeweils an einer Haltevorrichtung fixiert und mit dem Kraftfahrzeug verbunden sind.

Gemäß einer Ausführungsform der Erfindung ist das Kraftfahrzeug ein Motorrad oder ein Motorfahrrad.

Die oben erwähnte Aufgabe wird auch durch eine Stabilisierungsvorrichtung nach Anspruch 9 gelöst. Die Stabilisierungsvorrichtung ist zur Stabilisierung eines fahrerlosen einspurigen Kraftfahrzeugs, insbesondere eines Motorrads, während eines Prüflaufs auf einem Rollenprüfstand ausgebildet und weist Folgendes auf:
einen feststehenden Basisteil;
ein Verbindungselement zur Verbindung mit einem Vorderradlenkteil des Kraftfahrzeugs, insbesondere einer Vorderradaufhängung; und
ein mit dem Basisteil und dem Verbindungselement verbundenes Gelenkelement, das zumindest eine im Wesentlichen vertikale Drehachse aufweist.

Hinsichtlich der Vorteile und weiteren Ausgestaltung der Stabilisierungsvorrichtung wird auf die obigen Ausführungen zu dem Verfahren nach Anspruch 1 verwiesen. Die oben beschriebenen Vorteile, Definitionen und Merkmale sind auch auf die Stabilisierungsvorrichtung nach Anspruch 9 übertragbar.

Günstig ist, wenn das Gelenkelement zumindest eine, vorzugsweise zwei, horizontale Drehachsen aufweist. Dadurch wir die Lenkbewegung verbessert.

Bevorzugt ist das Gelenkelement der Stabilisierungsvorrichtung durch ein Kugelgelenk gebildet. Ein solches Kugelgelenk besitzt drei rotatorische Freiheitsgrade und damit auch drei Drehachsen, nämlich eine vertikale Drehachse und zwei horizontale Drehachsen. Vorteilhaft bei dieser Ausführungsform ist, dass das Verbindungselement bzw. das Kraftfahrzeug während der Lenkbewegung auch geneigt werden kann. Zudem werden vertikale Bewegungen des Verbindungselements während der Lenkbewegung ermöglicht. Außerdem kann die Stabilisierungsvorrichtung mit unterschiedlichen Typen und Größen von einspurigen Kraftfahrzeugen verwendet werden.

Eine besonders stabile Verbindung zwischen dem Vorderradlenkteil und dem Verbindungselement kann erzielt werden, wenn das Verbindungselement zwei parallele Schenkel aufweist, die mit gegenüberliegenden Seiten des Vorderradlenkteils des Kraftfahrzeugs verbindbar sind. Die Schenkel können über ein Endstück, beispielsweise eine rechtwinkelig zu den Schenkeln angeordnete Querstange oder Querstrebe, miteinander verbunden sein. Das Verbindungselement ist bevorzugt bei dieser Ausführungsform als Gabel ausgebildet. Das Endstück kann wiederum mit dem Gelenkelement verbunden sein. An den dem Endstück gegenüberliegenden Enden der Schenkel können die Schenkel Drehlager für überstehende Vorderachsenenden oder Befestigungselemente aufweisen, mit denen die Schenkel mit dem Vorderradlenkteil verbindbar sind. Die Befestigungselemente können beispielsweise drehbar gelagert sein. Die Befestigungselemente können ebenfalls jeweils rechtwinkelig zu den Schenkeln orientiert sein. Es kann aber auch vorgesehen sein, dass das Verbindungselement eine drehbar gelagerte Radachse zwischen den Schenkeln aufweist, die während eines Prüflaufs die Vorderachse des Kraftfahrzeugs ersetzt. Die Radachse kann drehbar an den Schenkeln gelagert sein.

Die Stabilisierungsvorrichtung der beschriebenen Art kann einen Teil eines Rollenprüfstandes bilden. Ein solcher Rollenprüfstand weist eine Hinterradrolleneinheit und eine Vorderradrolleneinheit auf. Die im Wesentlichen vertikale Drehachse des Gelenkelements ist dann im Wesentlichen senkrecht zu einer Bodenfläche des Rollenprüfstandes angeordnet. Die Bodenfläche ist bevorzugt eine horizontale Bodenfläche.

Um ein Kippen des Kraftfahrzeugs zusätzlich zu verhindern, ist es günstig, wenn der Rollenprüfstand zumindest eine Haltevorrichtung und zumindest ein mit der Haltevorrichtung verbindbares Halteelement, vorzugsweise einen Haltegurt, zur Fixierung des Kraftfahrzeugs aufweist. Das zumindest eine Halteelement kann beispielsweise an der Lenkerstange des Kraftfahrzeugs befestigt sein. Die zumindest eine Haltevorrichtung kann mit einem ortsfesten Punkt am Prüfstand verbunden sein. In der Ausgangsposition des Kraftfahrzeugs kann das zumindest eine Halteelement ohne Aufbringung einer Halte- oder Spannkraft, d.h. ohne Dehnung, mit dem Kraftfahrzeug verbunden sein. Im Falle einer Kippbewegung verhindert das zumindest eine Halteelement zusätzlich neben der Stabilisierungsvorrichtung das Umkippen des Kraftfahrzeugs. Vorzugsweise sind zwei insbesondere gegenüberliegende Halteelemente vorgesehen, die jeweils an einer Haltevorrichtung fixierbar und mit dem Kraftfahrzeug verbindbar sind. Das Kraftfahrzeug kann in diesem Fall an zwei Seiten zusätzlich stabilisiert werden.

Die Erfindung betrifft weiters ein Prüfsystem, aufweisend:
einen Rollenprüfstand der beschriebenen Art; und
ein einspuriges Kraftfahrzeug, insbesondere ein Motorrad, welches mit einem Vorderrad auf der Vorderradrolleneinheit und mit dem Hinterrad auf der Hinterradrolleneinheit platziert ist, wobei zur Stabilisierung des Kraftfahrzeugs während eines Prüflaufs ein Vorderradlenkteil des Kraftfahrzeugs mit der Stabilisierungsvorrichtung des Rollenprüfstandes verbunden ist.

Im Folgenden wird die Erfindung näher anhand von Figuren beschrieben, auf die sie allerdings nicht beschränkt sein soll. Es zeigen:
Fig. 1A und Fig. 1B schematisch jeweils einen Rollenprüfstand aus dem Stand der Technik mit einem einspurigen Kraftfahrzeug in einer Schrägansicht von vorne;
Fig. 2 schematisch einen erfindungsgemäßen Rollenprüfstand mit einem einspurigen Kraftfahrzeug in einer Schrägansicht von vorne;
Fig. 3A-3C schematisch die Stabilisierung eines Vorderrades und eines Hinterrads eines einspurigen Kraftfahrzeugs mit der erfindungsgemäßen Stabilisierungsvorrichtung in einer Ansicht von oben;
Fig. 4A-4C schematisch die Stabilisierung eines Hinterrades mit der erfindungsgemäßen Stabilisierungsvorrichtung in einer Ansicht von oben; und
Fig. 5 schematisch eine Ansicht eines Rollenprüfstands von vorne.

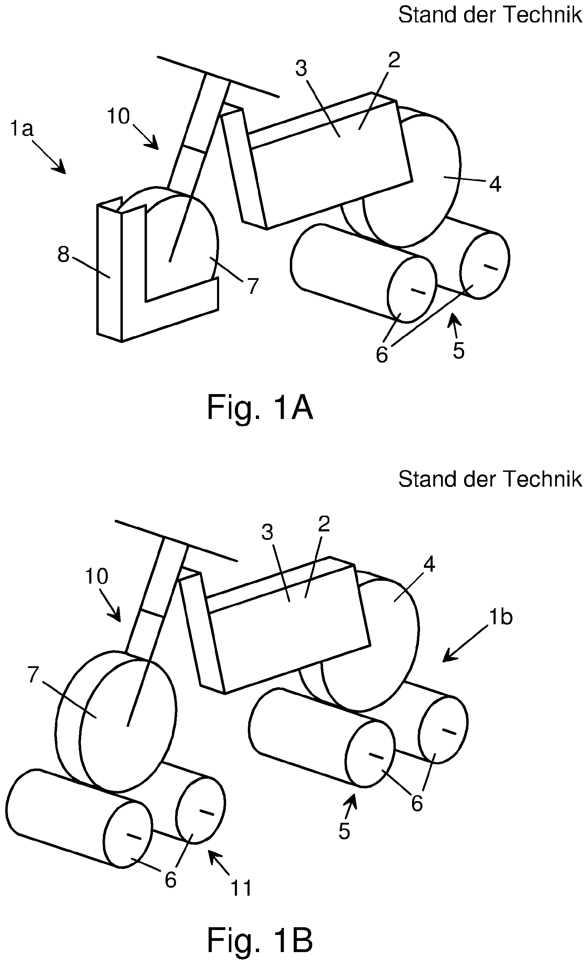

Fig. 1 zeigt einen Rollenprüfstand 1a aus dem Stand der Technik mit einem einspurigen Kraftfahrzeug 2 in Form eines Motorrads 3. Das Hinterrad 4 des Kraftfahrzeugs 2 kann mit Hilfe einer Hinterradrolleneinheit 5 oder eines Motors des Kraftfahrzeugs 2 angetrieben werden. Die Hinterradrolleneinheit 5 des dargestellten Rollenprüfstandes 1a besitzt zwei parallele Rollen 6 (sog. Doppelrollen). Das Vorderrad 7 ist mittels einer Klemmvorrichtung 8 fixiert, um ein Kippen des Kraftfahrzeugs 2 während eines Prüflaufs zu verhindern und um das Kraftfahrzeug 2 in Längsrichtung zu fixieren. Das Vorderrad 7 wird hierbei nicht angetrieben, sondern wird während des Prüflaufs in der Klemmvorrichtung 8 unbeweglich festgehalten.

Bei manchen Tests, wie beispielsweise bei "End of Line"-Tests in der Produktion von einspurigen Kraftfahrzeugen 2 oder bei Bremsentests mit ABS-Bremssystemen, kann es aber erforderlich sein, dass neben dem Hinterrad 4 auch das Vorderrad 7 angetrieben wird. Aus dem Stand der Technik sind dazu Rollenprüfstände 1b bekannt, bei denen sowohl das Vorderrad 7, als auch das Hinterrad 4 mittels entsprechender Rolleneinheiten angetrieben werden können (siehe Fig. 1B). Nachteiligerweise muss jedoch ein Fahrer (nicht gezeigt) das einspurige Kraftfahrzeug 2 während eines Prüflaufs auf den Rolleneinheiten durch Lenkbewegungen stabilisieren, um ein Kippen des Kraftfahrzeugs 2 zu verhindern.

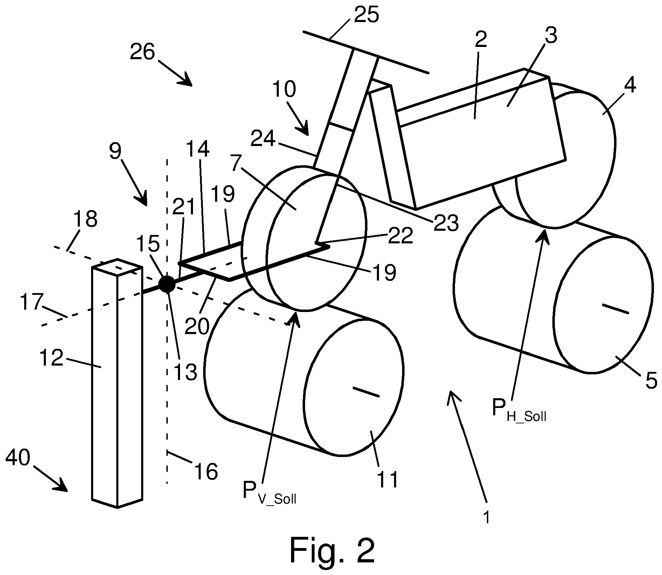

Um einen fahrerlosen Prüflauf eines einspurigen Kraftfahrzeugs 2 auf einem Rollenprüfstand 1 zu ermöglichen, ist erfindungsgemäß eine Stabilisierungsvorrichtung 9 vorgesehen, die mit einem Vorderradlenkteil 10 eines einspurigen Kraftfahrzeugs 2 verbindbar ist (siehe Fig. 2). Die Stabilisierungsvorrichtung 9 verhindert ein Kippen des fahrerlosen einspurigen Kraftfahrzeugs 2 und hält dieses stabil in der vorgesehenen Sollposition auf dem Rollenprüfstand 1.

Fig. 2 zeigt einen Rollenprüfstand 1 mit einer Hinterradrolleneinheit 5, einer Vorderradrolleneinheit 11 und einer Stabilisierungsvorrichtung 9. Das Vorderrad 7 und das Hinterrad 4 sind auf der Vorderradrolleneinheit 11 bzw. auf der Hinterradrolleneinheit 5 platziert. Die Stabilisierungsvorrichtung 9 ist mit dem Vorderradlenkteil 10 des Kraftfahrzeugs 2 verbunden. Die Hinterradrolleneinheit 5 und/oder die Vorderradrolleneinheit 11 können unabhängig voneinander antreibbar sein. Ein Antreiben des Hinterrades 4 kann auch durch den Motor des Kraftfahrzeugs 2 erfolgen. Die Hinterradrolleneinheit 5 und die Vorderradrolleneinheit 11 können als einfache Rolleneinheiten mit jeweils einer einzigen Rolle 6 ausgebildet sein. Die Hinterradrolleneinheit 5 und die Vorderradrolleneinheit 11 können aber auch jeweils zwei parallele Rollen 6 aufweisen, wie dies bei dem Rollenprüfstand 1b gemäß Fig. 1B gezeigt ist. Dadurch kann das einspurige Kraftfahrzeug 2 besser in Längsrichtung fixiert werden.

Die erfindungsgemäße Stabilisierungsvorrichtung 9 weist einen feststehenden Basisteil 12, ein Gelenkelement 13 und ein Verbindungselement 14 auf. Der Basisteil 12 ist in der gezeigten Darstellung quaderförmig ausgebildet und mit einer Bodenfläche 40 verbunden. Der Basisteil 12 kann alternativ auch zum Beispiel mit einer Wand (nicht gezeigt) oder einem anderen Fixpunkt in der Umgebung verbunden sein. Das Gelenkelement 13 ist vorzugsweise durch ein Kugelgelenk 15 gebildet, welches drei Drehachsen, nämlich eine im Wesentlichen vertikale Drehachse 16 und zwei im Wesentlichen horizontale Drehachsen 17, 18 aufweist. Das Gelenkelement 13 hat drei rotatorische Freiheitsgrade, die unabhängig voneinander sind. Durch die im Wesentlichen vertikale Drehachse 16 kann bereits eine Lenkbewegung des Vorderradlenkteils 10 bewirkt werden. Die horizontalen Achsen 17, 18 ermöglichen eine an das jeweilige Kraftfahrzeug 2 angepasste Lenkbewegung. Durch die im Wesentlichen horizontale Achse 17 ist eine Neigungsmöglichkeit, insbesondere eine Rollbewegung, des Kraftfahrzeugs 2 während der Lenkbewegung gegeben. Durch die im Wesentlichen horizontale Achse 18 können allfällige vertikale Bewegungen des Verbindungselements 14 während der Lenkbewegung ausgeglichen werden. Darüber hinaus können Kraftfahrzeuge unterschiedlicher Größe verwendet werden und Gegebenheiten wie unterschiedliche Reifendrücke oder Reifenzustände ausgeglichen werden.

Das Verbindungselement 14 ist zur Verbindung der Stabilisierungsvorrichtung 9 mit einem Vorderradlenkteil 10 eines einspurigen Kraftfahrzeugs 2 ausgebildet und weist in der gezeigten Darstellung zwei im Wesentlichen parallele Schenkel 19 auf, die über eine im Wesentlichen rechtwinkelig zu den beiden Schenkeln 19 orientierte Querstrebe 20 miteinander verbunden sind. Die Querstrebe 20 ist wiederum über einen Fortsatz 21 mit dem Gelenkelement 13 verbunden. An den der Querstange 20 gegenüberliegenden Enden weisen die Schenkel 19 in der gezeigten Darstellung jeweils Befestigungselemente 22 auf, die ebenfalls im Wesentlichen rechtwinkelig zu den Schenkeln 19 angeordnet sein können. Die Befestigungselemente 22 können beispielsweise mit einer Vorderradaufhängung 23 des einspurigen Kraftfahrzeugs 2, insbesondere einer Vordergabel 24, oder einer Vorderachse, verbunden sein. Die Verbindung kann beispielsweise mittels Schraubmuttern erfolgen. Die Befestigungselemente 22 können drehbar an den Schenkeln 19 gelagert sein. Es ist aber auch möglich, die Stabilisierungsvorrichtung 9 mit anderen Teilen des Vorderradlenkteils 10 zu verbinden, beispielsweise der Lenkerstange 25.

Durch die Stabilisierungsvorrichtung 9 wird, wenn das Vorderrad 7 des einspurigen Kraftfahrzeugs 2 von einer Vorderrad-Sollposition P_{V_Soll} abweicht, das Vorderradlenkteil 10 geneigt und so eine Lenkbewegung erzwungen, die das Vorderrad 7 wieder an die Vorderrad-Sollposition P_{V_Soll} zurückführt. Durch die Lenkbewegung des Vorderradlenkteils 10 wird auch das Hinterrad 4 wieder im Falle einer Abweichung an seine Hinterrad-Sollposition P_{H_Sol} geführt, sodass ein Selbstpositionierungs- und ein Selbststabilisierungseffekt des einspurigen Kraftfahrzeugs 2 eintritt. Vorteilhafterweise erfolgen die Rückführung des Vorderrades 7 und des Hinterrades 4 durch die Stabilisierungsvorrichtung 9 ohne aktive Regelung oder Steuerung.

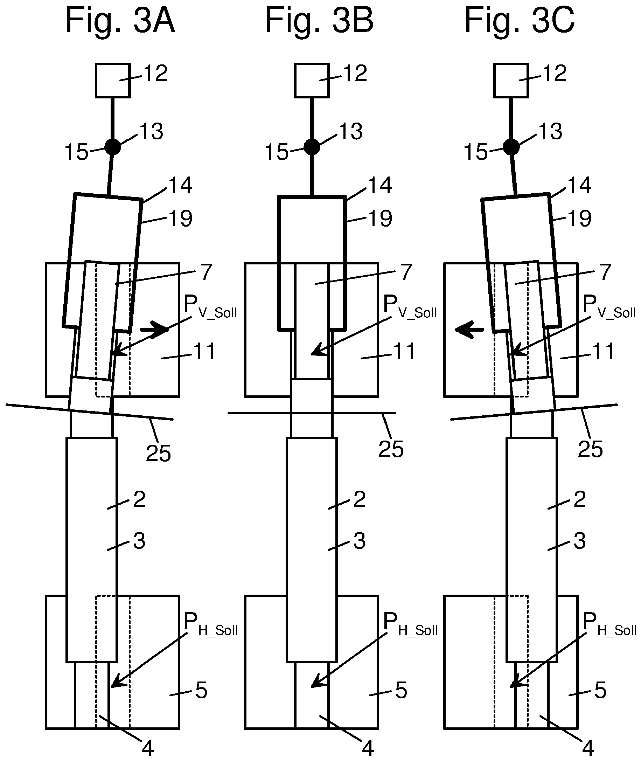

In Fig. 3A-C sind die Rückführung des Vorderrads 7 an die Vorderrad-Sollposition P_{V_Soll} und die Rückführung des Hinterrads 4 an die Hinterrad-Sollposition P_{H_Soll} in einer Ansicht von oben schematisch veranschaulicht. Die Vorderrad-Sollposition P_{V_Soll} befindet sich vorzugsweise in der Mitte der Vorderradrollenheit 11 und die Hinterrad-Sollposition P_{H_Soll} befindet sich vorzugsweise in der Mitte der Hinterradrolleneinheit 5.

In Fig. 3A ist das einspurige Kraftfahrzeug 2 nach links ausgelenkt, sodass sich das Vorderrad 7 und das Hinterrad 4 nicht an den jeweiligen Sollpositionen P_{V_Soll} und P_{H_Soll} befinden. Wie in Fig. 3A gezeigt, wird durch die Stabilisierungsvorrichtung 9 aufgrund der Abweichung des Vorderrads 7 von der Vorderrad-Sollposition P_{V_Soll} eine Lenkbewegung des Kraftfahrzeugs 2 nach rechts erzwungen, sodass das Vorderrad 7 und in weiterer Folge auch das Hinterrad 4 in die jeweilige Sollposition P_{V_Soll} und P_{H_Soll} zurückführt werden.

In Fig. 3B befinden sich das Vorderrad 7 und das Hinterrad 4 in den jeweiligen Sollpositionen P_{V_Soll} und P_{H_Soll} in der Mitte der Rolleneinheiten 5, 11. Diese Position des Kraftfahrzeugs 2 kann auch als Normalposition bzw. Ausgangsposition bezeichnet werden.

In Fig. 3C ist der zu Fig. 3A spiegelbildliche Fall dargestellt. Fig. 3C zeigt eine Auslenkung des einspurigen Kraftfahrzeugs 2 nach rechts und eine durch die Stabilisierungsvorrichtung 9 erzwungene Lenkbewegung nach links, sodass das Vorderrad 7 und auch das Hinterrad 4 in die jeweilige Sollposition P_{V_Soll} und P_{H_Soll} zurückgeführt werden.

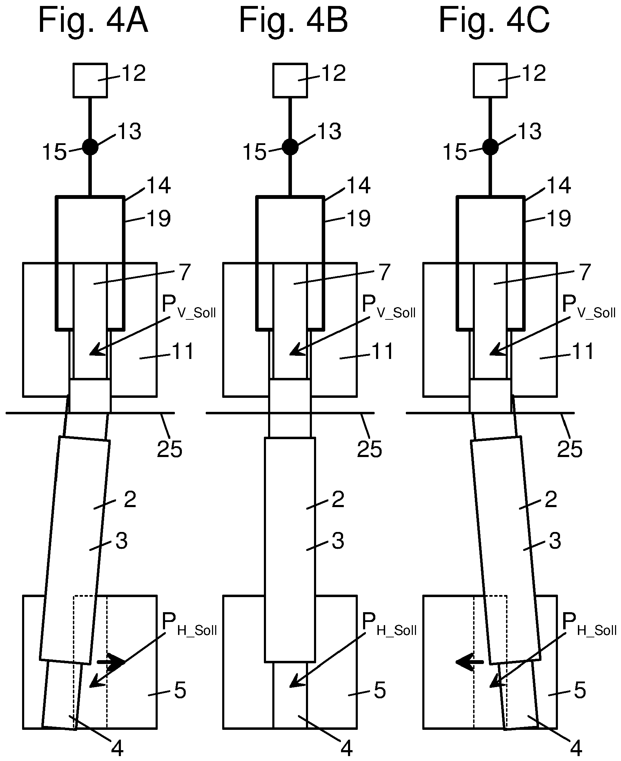

In den Fig. 4A-C ist eine Rückführung des Hinterrads 4 in die Hinterrad-Sollposition P_{H_Soll} in einer Ansicht von oben schematisch veranschaulicht. Das Vorderrad 7 befindet sich bereits in der Vorderradsollposition P_{V_Soll}.

In Fig. 4A ist das Hinterrad 4 nach links ausgelenkt und befindet sich somit nicht in der Hinterrad-Sollposition P_{H_Soll}. Durch die Ausrichtung des Vorderrads 7, welches sich bereits in der Vorderrad-Sollposition P_{V_Soll} befindet, wird durch die auftretenden Rückstellkräfte F auch das Hinterrad 4 zurück in die Hinterrad-Sollposition P_{H_Soll} gebracht, wie dies in Fig. 4B gezeigt ist.

Fig. 4B zeigt das einspurige Kraftfahrzeug 2 in der Normalposition bzw. Ausgangsposition.

In Fig. 4C ist der zu Fig. 4A spiegelbildliche Fall dargestellt. In Fig. 4C ist das Hinterrad 4 nach rechts ausgelenkt und befindet sich nicht in der Hinterrad-Sollposition P_{H_Soll}. Durch die Ausrichtung des Vorderrads 7 in der Vorderrad-Sollposition P_{V_Soll} wird auch das Hinterrad 4 durch die auftretenden Rückstellkräfte F zurück in die Hinterrad-Sollposition P_{H_Soll} gebracht (siehe Fig. 4B).

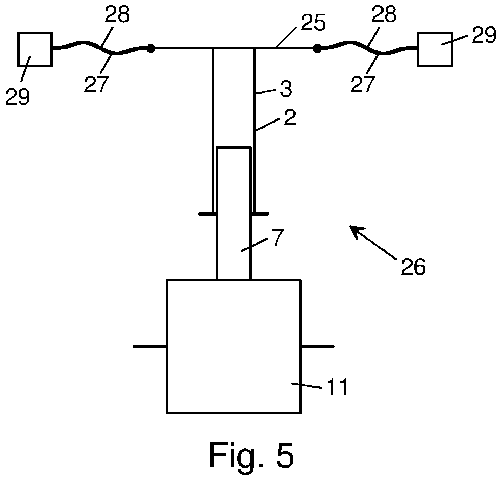

Fig. 5 zeigt schematisch ein Prüfsystem 26 mit einem Rollenprüfstand 1 und einem daran angeordneten einspurigen Kraftfahrzeug 2 in einer Ansicht von vorne. Das einspurige Kraftfahrzeug 2 ist mit der Stabilisierungsvorrichtung 9 verbunden, welche aber zum Zwecke der übersichtlicheren Darstellung nicht gezeigt ist. Das Kraftfahrzeug 2 ist zusätzlich noch an gegenüberliegenden Seiten durch Halteelemente 27 in Form von Haltegurten 28 gesichert. Die Halteelemente 27 können auch durch Seile oder Ketten gebildet sein. Die Halteelemente 27 sind jeweils an einer feststehenden Haltevorrichtung 29, beispielsweise einem Haken oder einer Befestigungsöse, und an dem einspurigen Kraftfahrzeug 2 befestigt. In der gezeigten Darstellung sind die Halteelemente 27 an den Enden der Lenkerstange 25 befestigt. Die Halteelemente 27 können aber auch an einer anderen Stelle am Kraftfahrzeug 2 befestigt sein. In Fig. 5 befindet sich das einspurige Kraftfahrzeug 2 in der aufrechten, fahrbereiten Normalposition. In dieser Position bringen die Halteelemente 27 keine Spannkraft auf das einspurige Kraftfahrzeug 2 auf. Sobald das einspurige Kraftfahrzeug 2 jedoch in eine Richtung kippt, spannt sich eines der Halteelemente 27 und das einspurige Kraftfahrzeug 2 wird vom weiteren Umkippen bewahrt.

## Patentansprüche

1. Verfahren zur Stabilisierung eines fahrerlosen einspurigen Kraftfahrzeugs (2), insbesondere eines Motorrads (3), während eines Prüflaufs auf einem Rollenprüfstand (1), wobei das Verfahren folgende Schritte aufweist:
Verbinden eines Vorderradlenkteils (10) des Kraftfahrzeugs (2) mit einer Stabilisierungsvorrichtung (9), die einen feststehenden Basisteil (12) und ein Verbindungselement (14) zur Verbindung mit dem Vorderradlenkteil (10) aufweist ;
Antreiben eines Vorderrades (7) des Kraftfahrzeugs (2) durch eine Vorderradrolleneinheit (11) und/oder Antreiben eines Hinterrades (4) des Kraftfahrzeugs (2) durch eine Hinterradrolleneinheit (5); und
Stabilisieren des Kraftfahrzeugs (2) durch Rückführen des Vorderrades (7) an eine Vorderrad-Sollposition (P_{V_Soll}) an der Vorderradrolleneinheit (11) durch die Stabilisierungsvorrichtung (9) im Falle einer Abweichung des Vorderrads (7) von der Vorderrad-Sollposition (P_{V_Soll}),
**dadurch gekennzeichnet, dass** die Stabilisierungsvorrichtung (9) ein mit dem Basisteil (12) und dem Verbindungselement (14) verbundenes Gelenkelement (13) aufweist und das Gelenkelement (13) zumindest eine im Wesentlichen vertikale Drehachse (16) besitzt.

2. Verfahren nach Anspruch 1, **dadurch gekennzeichnet, dass** im Falle einer Abweichung des Vorderrads (7) von der Vorderrad-Sollposition (P_{V_Soll}) das Vorderradlenkteil (10) durch das Gelenkelement (13) derart gelenkt wird, dass das Vorderrad (7) in die Vorderrad-Sollposition (P_{V_Soll}) rückgeführt wird.

3. Verfahren nach Anspruch 1 oder 2, **dadurch gekennzeichnet, dass** das Verbindungselement (14) an einer Vorderradaufhängung (23), insbesondere an einer Vorderachse, des Vorderradlenkteils (10) mit dem Kraftfahrzeug (2) verbunden ist.

4. Verfahren nach einem der Ansprüche 1 bis 3, **dadurch gekennzeichnet, dass** das Verbindungselement (14) zwei im Wesentlichen parallele Schenkel (19) aufweist, die mit gegenüberliegenden Seiten des Vorderradlenkteils (10) des Kraftfahrzeugs (2) verbunden sind.

5. Verfahren nach einem der Ansprüche 1 bis 4, **dadurch gekennzeichnet, dass** das Gelenkelement (13) zumindest eine, vorzugsweise zwei, horizontale Drehachsen (17, 18) aufweist.

6. Verfahren nach einem der Ansprüche 1 bis 5, **dadurch gekennzeichnet, dass** das Gelenkelement (13) durch ein Kugelgelenk (15) gebildet ist.

7. Verfahren nach einem der Ansprüche 1 bis 6, **dadurch gekennzeichnet, dass** das Kraftfahrzeug (2) zusätzlich mit zumindest einem Halteelement (27), vorzugsweise einem Haltegurt (28), an zumindest einer Haltevorrichtung (29) fixiert wird.

8. Verfahren nach einem der Ansprüche 1 bis 7, **dadurch gekennzeichnet, dass** das Kraftfahrzeug (2) ein Motorrad (3) oder ein Motorfahrrad ist.

9. Stabilisierungsvorrichtung (9) zur Stabilisierung eines fahrerlosen einspurigen Kraftfahrzeugs (2), insbesondere eines Motorrads (3), während eines Prüflaufs auf einem Rollenprüfstand (1), aufweisend:
einen feststehenden Basisteil (12); und
ein Verbindungselement (14) zur Verbindung mit einem Vorderradlenkteil (10) des Kraftfahrzeugs (2), insbesondere einer Vorderradaufhängung (23);
**dadurch gekennzeichnet, dass** die Stabilisierungsvorrichtung (9)_ein mit dem Basisteil (12) und dem Verbindungselement (14) verbundenes Gelenkelement (13) aufweist, das zumindest eine im Wesentlichen vertikale Drehachse (16) aufweist.

10. Stabilisierungsvorrichtung nach Anspruch 9, **dadurch gekennzeichnet, dass** das Gelenkelement (13) zumindest eine, vorzugsweise zwei, horizontale Drehachsen (17, 18) aufweist.

11. Stabilisierungsvorrichtung (9) nach Anspruch 9 oder 10, **dadurch gekennzeichnet, dass** das Gelenkelement (13) durch ein Kugelgelenk (15) gebildet ist.

12. Stabilisierungsvorrichtung (9) nach einem der Ansprüche 9 bis 11, **dadurch gekennzeichnet, dass** das Verbindungselement (14) zwei parallele Schenkel (19) aufweist, die mit gegenüberliegenden Seiten des Vorderradlenkteils (10) des Kraftfahrzeugs (2) verbindbar sind.

13. Rollenprüfstand (1) mit einer Hinterradrolleneinheit (5) und einer Vorderradrolleneinheit (11), **dadurch gekennzeichnet, dass** der Rollenprüfstand (1) eine Stabilisierungsvorrichtung (9) nach einem der Ansprüche 9 bis 12 aufweist, wobei die vertikale Drehachse (16) im Wesentlichen senkrecht zu einer Bodenfläche (40) des Rollenprüfstandes (1) angeordnet ist.

14. Rollenprüfstand (1) nach Anspruch 13, **dadurch gekennzeichnet, dass** der Rollenprüfstand (1) zumindest eine Haltevorrichtung (29) und zumindest ein mit der Haltevorrichtung (29) verbindbares Halteelement (27), vorzugsweise einen Haltegurt (28), zur Fixierung des Kraftfahrzeugs (2) aufweist.

15. Prüfsystem (26), aufweisend:
einen Rollenprüfstand (1) nach einem der Ansprüche 13 oder 14; und
ein einspuriges Kraftfahrzeug (2), insbesondere ein Motorrad (3), welches mit einem Vorderrad (7) auf der Vorderradrolleneinheit (11) und mit dem Hinterrad (4) auf der Hinterradrolleneinheit (5) platziert ist, wobei zur Stabilisierung des Kraftfahrzeugs (2) während eines Prüflaufs ein Vorderradlenkteil (10) des Kraftfahrzeugs (2) mit der Stabilisierungsvorrichtung (9) des Rollenprüfstandes (1) verbunden ist.

## Claims

1. A method for stabilising a driverless single-track motor vehicle (2), in particular a motorcycle (3), during a test run on a roller dynamometer (1), the method comprising the steps of:
connecting a front wheel steering part (10) of the motor vehicle (2) to a stabilising device (9) which has a stationary base part (12) and a connecting element (14) for connection to the front wheel steering part (10);
driving a front wheel (7) of the motor vehicle (2) by a front wheel roller unit (11) and/or driving a rear wheel (4) of the motor vehicle (2) by a rear wheel roller unit (5); and
stabilising the motor vehicle (2) by returning the front wheel (7) to a front wheel setpoint position (P_{V_Soll}) on the front wheel roller unit (11) via the stabilising device (9) in the event of a deviation of the front wheel (7) from the front wheel setpoint position (P_{V_Soll}),
**characterized in that** the stabilizing device (9) has a joint element (13) connected to the base part (12) and the connecting element (14), and the joint element (13) has at least one substantially vertical rotation axis (16).

2. The method according to claim 1, **characterised in that** in the event of a deviation of the front wheel (7) from the front wheel setpoint position (P_{V_Soll}), the front wheel steering part (10) is steered by the joint element (13) in such a way that the front wheel (7) is returned to the front wheel setpoint position (P_{V_Soll}).

3. The method according to claim 1 or 2, **characterised in that** the connecting element (14) is connected to the motor vehicle (2) at a front wheel suspension (23), in particular at a front axle, of the front wheel steering part (10).

4. The method according to any of claims 1 to 3, **characterised in that** the connecting element (14) has two substantially parallel legs (19) connected to opposite sides of the front wheel steering part (10) of the motor vehicle (2).

5. The method according to any of claims 1 to 4, **characterised in that** the joint element (13) has at least one, preferably two, horizontal rotation axes (17, 18).

6. The method according to any of claims 1 to 5, **characterised in that** the joint element (13) is formed by a ball-and-socket joint (15).

7. The method according to any of claims 1 to 6, **characterised in that** the motor vehicle (2) is additionally fixed to at least one holding device (29) by at least one holding element (27), preferably a holding belt (28).

8. The method according to any one of claims 1 to 7, **characterised in that** the motor vehicle (2) is a motorcycle (3) or a moped.

9. A stabilising device (9) for stabilising a driverless single-track motor vehicle (2), in particular a motorcycle (3), during a test run on a roller dynamometer (1), comprising:
a stationary base part (12); and
a connecting element (14) for connection to a front wheel steering part (10) of the motor vehicle (2), in particular a front wheel suspension (23);
**characterized in that** the stabilizing device (9) has a joint element (13), which is connected to the base part (12) and the connecting element (14) and which has at least one substantially vertical rotation axis (16).

10. The stabilising device according to claim 9, **characterised in that** the joint element (13) has at least one, preferably two, horizontal rotation axes (17, 18).

11. The stabilising device (9) according to claim 9 or 10, **characterised in that** the joint element (13) is formed by a ball-and-socket joint (15).

12. The stabilising device (9) according to any of claims 9 to 11, **characterised in that** the connecting element (14) has two parallel legs (19), which can be connected to opposite sides of the front wheel steering part (10) of the motor vehicle (2).

13. A roller dynamometer (1) comprising a rear wheel roller unit (5) and a front wheel roller unit (11), **characterised in that** the roller dynamometer (1) has a stabilising device (9) according to any one of claims 9 to 12, wherein the vertical rotation axis (16) is arranged substantially perpendicular to a bottom surface (40) of the roller dynamometer (1).

14. The roller dynamometer (1) according to claim 13, **characterised in that** the roller dynamometer (1) has at least one holding device (29) and at least one holding element (27) for fixing the motor vehicle (2), preferably a holding belt (28), which can be connected to the holding device (29).

15. A test system (26) comprising:
a roller dynamometer (1) according to any one of claims 13 or 14; and
a single-track motor vehicle (2), in particular a motorcycle (3), which is placed with a front wheel (7) on the front wheel roller unit (11) and with the rear wheel (4) on the rear wheel roller unit (5), wherein for stabilising the motor vehicle (2) during a test run, a front wheel steering part (10) of the motor vehicle (2) is connected to the stabilising device (9) of the roller dynamometer (1).

## Revendications

1. Procédé de stabilisation d'un véhicule automobile (2) monovoie sans conducteur, en particulier d'une moto (3), pendant une course d'essai sur un banc d'essai à rouleaux (1), dans lequel le procédé présente les étapes suivantes :
liaison d'une partie d'articulation de roue avant (10) du véhicule automobile (2) avec un dispositif de stabilisation (9), qui présente une partie de base (12) fixe et un élément de liaison (14) pour la liaison avec la partie d'articulation de roue avant (10) ;
entraînement d'une roue avant (7) du véhicule automobile (2) par une unité à rouleaux de roue avant (11) et/ou entraînement d'une roue arrière (4) du véhicule automobile (2) par une unité à rouleaux de roue arrière (5) ; et
stabilisation du véhicule automobile (2) par le fait de ramener la roue avant (7) sur une position de consigne de roue avant (P_{V_Soll}) contre l'unité à rouleaux de roue avant (11) par le dispositif de stabilisation (9) dans le cas d'un décalage de la roue avant (7) par rapport à la position de consigne de roue avant (P_{V_Soll}),
**caractérisé en ce que** le dispositif de stabilisation (9) présente un élément d'articulation (13) relié avec la partie de base (12) et avec l'élément de liaison (14) et l'élément d'articulation (13) possède au moins un axe de rotation (16) essentiellement vertical.

2. Procédé selon la revendication 1, **caractérisé en ce que**, dans le cas d'un décalage de la roue avant (7) par rapport à la position de consigne de roue avant (P_{V_Soll}), la partie d'articulation de roue avant (10) est articulée par l'élément d'articulation (13) de sorte que la roue avant (7) soit ramenée dans la position de consigne de roue avant (P_{V_Soll}).

3. Procédé selon la revendication 1 ou 2, **caractérisé en ce que** l'élément de liaison (14) est relié avec le véhicule automobile (2) au niveau d'une suspension de roue avant (23), en particulier d'un essieu avant, de la partie d'articulation de roue avant (10).

4. Procédé selon l'une des revendications 1 à 3, **caractérisé en ce que** l'élément de liaison (14) présente deux branches (19) essentiellement parallèles qui sont reliées avec des côtés opposés de la partie d'articulation de roue avant (10) du véhicule automobile (2).

5. Procédé selon l'une des revendications 1 à 4, **caractérisé en ce que** l'élément d'articulation (13) présente au moins un, de préférence deux, axes de rotation (17, 18) horizontaux.

6. Procédé selon l'une des revendications 1 à 5, **caractérisé en ce que** l'élément d'articulation (13) est formé par une articulation à rotule (15).

7. Procédé selon l'une des revendications 1 à 6, **caractérisé en ce que** le véhicule automobile (2) est en outre fixé contre au moins un dispositif de retenue (29), avec au moins un élément de retenue (27), de préférence une sangle de retenue (28).

8. Procédé selon l'une des revendications 1 à 7, **caractérisé en ce que** le véhicule automobile (2) est une moto (3) ou une motocyclette.

9. Dispositif de stabilisation (9) pour la stabilisation d'un véhicule automobile (2) monovoie sans conducteur, en particulier d'une moto (3), pendant une course d'essai sur un banc d'essai à rouleaux (1), présentant :
une partie de base (12) fixe ; et
un élément de liaison (14) pour la liaison avec une partie d'articulation de roue avant (10) du véhicule automobile (2), en particulier une suspension de roue avant (23) ;
**caractérisé en ce que** le dispositif de stabilisation (9) présente un élément d'articulation (13) relié avec la partie de base (12) et avec l'élément de liaison (14), qui présente au moins un axe de rotation (16) essentiellement vertical.

10. Dispositif de stabilisation selon la revendication 9, **caractérisé en ce que** l'élément d'articulation (13) présente au moins un, de préférence deux, axes de rotation (17, 18) horizontaux.

11. Dispositif de stabilisation (9) selon la revendication 9 ou 10, **caractérisé en ce que** l'élément d'articulation (13) est formé par une articulation à rotule (15).

12. Dispositif de stabilisation (9) selon l'une des revendications 9 à 11, **caractérisé en ce que** l'élément de liaison (14) présente deux branches (19) parallèles qui peuvent être reliées avec des côtés opposés de la partie d'articulation de roue avant (10) du véhicule automobile (2).

13. Banc d'essai à rouleaux (1) avec une unité à rouleaux de roue arrière (5) et une unité à rouleaux de roue avant (11), **caractérisé en ce que** le banc d'essai à rouleaux (1) présente un dispositif de stabilisation (9) selon l'une des revendications 9 à 12, dans lequel l'axe de rotation (16) vertical est agencé essentiellement perpendiculairement à une surface de fond (40) du banc d'essai à rouleaux (1).

14. Banc d'essai à rouleaux (1) selon la revendication 13, **caractérisé en ce que** le banc d'essai à rouleaux (1) présente au moins un dispositif de retenue (29) et au moins un élément de retenue (27), de préférence une sangle de retenue (28), pouvant être reliée avec le dispositif de retenue (29), pour la fixation du véhicule automobile (2).

15. Système d'essai (26), présentant :
un banc d'essai à rouleaux (1) selon l'une des revendications 13 ou 14 ; et
un véhicule automobile (2) monovoie, en particulier une moto (3), lequel est placé avec une roue avant (7) sur l'unité à rouleaux de roue avant (11) et avec la roue arrière (4) sur l'unité à rouleaux de roue arrière (5), dans lequel une partie d'articulation de roue avant (10) du véhicule automobile (2) est reliée avec le dispositif de stabilisation (9) du banc d'essai à rouleaux (1) pour la stabilisation du véhicule automobile (2) pendant une course d'essai.
